# EUROPÄISCHE PATENTSCHRIFT

(11) **EP 3 293 466 B1**
(45) Veröffentlichungstag und Bekanntmachung des Hinweises auf die Patenterteilung: **01.01.2020**
(21) Anmeldenummer: 16188587.6
(22) Anmeldetag: 13.09.2016
(51) Int. Cl.: F24T 10/15, F28F 1/16

(54) **ERDWÄRMEROHR MIT RIPPEN UND ERDWÄRMESONDE**
GEOTHERMAL HEAT PIPE WITH RIBS AND GEOTHERMAL PROBE
TUBE D'ÉNERGIE GÉOTHERMIQUE AVEC AILETTES ET SONDE GÉOTHERMIQUE

(43) Veröffentlichungstag der Anmeldung: 14.03.2018
(73) Patentinhaber: G.H.P.- e.K. Geothermie- Handel- und Produktion e.k., 83224 Grassau (DE)
(72) Erfinder: Schuster, Franz-Xaver, 83224 Grassau (DE)
(74) Vertreter: Becker Kurig Straus

(56) Entgegenhaltungen:
- EP-A2- 2 913 607
- DE-A1-102008 029 400
- JP-A- 2001 255 081
- US-A- 5 339 890
- US-A1- 2003 079 867
- US-A1- 2008 257 436
- DATABASE EPODOC [Online] EUROPEAN PATENT OFFICE, THE HAGUE, NL; XP002764083, Database accession no. KR-20130134539-A -& KR 101 368 362 B1 (KD POWER CO LTD [KR]) 3. März 2014 (2014-03-03)

## Beschreibung

Die vorliegende Erfindung betrifft ein mit Rippen versehenes Erdwärmerohr und eine damit ausgerüstete Erdwärmesonde.

Eine mit einem Erdwärmerohr verbundene Erdwärmesonde ist ein geschlossenes, mit einer zirkulierenden Wärmeträgerflüssigkeit befülltes U-förmiges Rohrsystem. Sie wird in der Regel in ein vertikal oder seltener schräg angeordnetes Bohrloch in dem Untergrund eingebaut. Mit der Erdwärmesonde wird dem Erdreich Wärme entzogen, die meist an den Wärmetauscher (Verdampfer) einer Wärmepumpe weitergegeben wird. Mit Hilfe der Wärmepumpe ist die wirtschaftliche Nutzung der Erdwärme zur Gebäudeheizung möglich. Die Erdwärmesonde ist eine Nutzungsmöglichkeit der oberflächennahen Geothermie.

Die übliche und weit verbreitete Erdwärmesonde besteht aus Polyethylen-Kunststoffrohren, die am jeweils unteren Ende mit einem U-förmigen Fußteil verbunden sind. Man spricht daher auch von U-Sonden oder Doppel-U-Sonden, wenn zwei Rohrpaare pro Bohrloch verwendet werden. Möglich sind aber auch koaxiale Sonden, bei denen Vor- und Rücklauf bzw. Auf- und Abstieg des Wärmeträgerfluids im Innenrohr und im Ringraum zwischen innerem und äußerem Rohr der Koaxialsonde erfolgen. Die Rohre werden im geschlossenen Kreislauf von einer Sole, einem Gemisch aus Wasser und Frostschutzmittel, durchströmt. Solegefüllte Erdsonden sind jedoch häufig in wasserwirtschaftlich sensiblen Gebieten nicht zugelassen.

Aus den Patentschriften CH 697102A5, der Offenlegungsschrift DE 10 2007 002 606 A1, der Patentanmeldung EP 2 913 607 A2 sowie der Gebrauchmusterschrift DE 203 06 216 U1 sind bereits verschiedene Erdwärmerohre bekannt. Aus den Patentdokumenten US 2003/079867 A1 und US 20082587436 A1 sind auch verschiedene Wärmetauscherrohre bekannt.

Bei bisher bekannten Erdwärmesondenfüßen treten Probleme auf, da die Sondenfüße entweder im Spritzguss hergestellt wurden oder aus mehreren Teilen zusammengesetzt werden. Beim Spritzguss können Probleme durch beim Spritzvorgang gebildete Oberflächen- Strukturen oder durch Grate an unterschiedlichen Teile der Spritzform entstehen. Bei Schweißvorgängen entstehen üblicherweise Schweißnähte und Schweißgrate, wobei die Schweißnähte eine Schwächung des Bauteil bedeuten, und die Schweißgrate üblicherweise einen Schweißgrat erzeugen, der sich auch in einen Kanal erstreckt, durch den das Wärmeträgerfluid fließt und in seiner Strömung behindert wird.

Es ist Aufgabe der vorliegenden Erfindung, ein Erdwärmerohr bereitzustellen, das die vorgenannten Nachteile nicht aufweist, besonders stabil ist, sicher verlegt werden kann und eine besonders strömungsgünstige Form des Kanals aufweist.

Diese Aufgabe wird gelöst durch ein Erdwärmerohr nach Anspruch 1. Vorteilhafte Ausfuhrungsformen ergeben sich aus den Unteransprüchen.

Gemäß der vorliegenden Erfindung wird ein Erdwärmerohr bereitgestellt, das an der Rohraußenseite Längs-Rippen mit einer Rippentiefe bzw. Rippenhöhe zwischen 1,5 und 0,2mm, bevorzugt zwischen 1,0 und 0,3mm und weiter bevorzugt zwischen 0,6 und 0,3mm aufweisen, wobei die Rippen im Querschnitt etwa dreieckig mit abgeplatteten Spitzen und gerundetem Grund zwischen den Rippen ausgebildet sind, wobei die Rippen an den abgeplatteten Enden verbreitert sind. Durch diese Längsrippen soll eine Verankerung an das Füllmaterial zwischen dem Bohrloch und der Erdwärmesonde hergestellt werden. Durch die sich zum Ende der Rippen hin verbreiternden Rippen kann sich das Erdwärmerohr nicht mehr so leicht von einem Füllmaterial lösen, wenn es einer Schrumpfung unterworfen ist, da sich die verbreiterten Rippenenden in dem Füllmaterial verkeilen. Durch das Verkeilen wird eine verbesserte Anbindung zwischen dem Erdwärmerohr und dem Füllmaterial erreicht. Durch eine bessere Anbindung kann zudem das Erdwärmerohr besser gegenüber dem Füllmaterial abgedichtet werden, da die Kontaktfläche zwischen dem Füllmaterial und dem Erdwärmerohr vergrößert wird und das Füllmaterial durch die Rippen besser an dem Rohr haftet. Ein mit Rippen versehenes Rohr weist zusätzlich den Vorteil auf, dass leichte Beschädigungen am Rohr vermieden werden können. Bevor eine Beschädigung an dem Rohr selbst auftritt, müssen vorher die Rippen beschädigt werden, wobei die Wandstärke des Rohrs selber nicht verringert wird. Somit kann ein Erdwärmerohr mit Außen-Rippen die Funktionssicherheit einer Erdwärmesonde verbessern. Durch die Verbreiterung der Rippen an ihrem Ende weist das Ende der Rippen eine im Wesentliche T-förmige Gestalt auf. Gemäß der Erfindung sind die Rippen im Querschnitt dreieckig ausgeführt. Bei dreieckigen Rippen wird eine besonders gute Anbindung an ein Füllmaterial erwartet, da das Füllmaterial besonders gut in den Raum zwischen den Rippen bzw. Riffeln eindringen kann. In einer weiteren nicht erfindungsgemäßen Ausführungsform des Erdwärmerohrs sind die Rippen im Querschnitt rechteckig ausgeführt. Bei rechteckigen Rippen wird durch eine größere Oberfläche eine bessere Anbindung an ein Füllmaterial erreicht. In einer zusätzlichen nicht erfindungsgemäßen Ausführungsform des Erdwärmerohrs sind die Riffel im Querschnitt trapezoid oder trapezförmig ausgeführt. Trapezförmige Riffeln ermöglichen ein Ineinandergreifen zwischen den Riffeln und dem Füllmaterial, wodurch eine weiter verbesserte Anbindung erzielt werden kann. Hier kann sich das Füllmaterial vor dem Aushärten hinter die trapezförmigen Riffel legen und so einen Formschluss zwischen dem Erdwärmerohr und den Riffeln erreichen. In einer weiteren zusätzlichen nicht erfindungsgemäßen Ausführungsform des Erdwärmerohrs sind die Riffel im Querschnitt T-förmig ausgeführt. Der Begriff trapezförmige Rippen und T-förmige Riffel soll dabei auch alle Querschnittsformen von Rippen umfassen, die eine Hinterschneidung aufweisen, wie im Querschnitt pilzförmige Riffel.

In einer zusätzlichen Ausführungsform des Erdwärmerohrs weist dieses abschnittweise Längs-Rippen auf. Dabei wechseln sich Riffel-Abschnitte mit Unterbrechungs-Abschnitten oder Abschnitten mit einer anderen Rippe ab. Es ist bevorzugt, dass die Abschnitte R die Rippen aufweisen, deutlich länger als Unterbrechungs-Abschnitte U sind, die keine Rippen aufweisen. Durch die Grenzen zwischen den Rippen-Abschnitten R und den Unterbrechungs-Abschnitten U sollen Grenzen geschaffen werden, die ein Ablöseverhalten zwischen dem Rohr und dem Füllmaterial verändern. Sollte sich die Verbindung zwischen dem Rohr und dem Füllmaterial in einem Bereich lösen, soll durch die Grenzen verhindert werden, dass diese Ablösung ungehindert an dem gesamten Erdwärmerohr entlangwandern kann.

Bei einer anderen Ausführung sind Rippen mit einer sägezahnartigen Stufung versehen, die in Längsrichtung verläuft. Dadurch kann man durch einfaches Überstreichen des Rohres eine Vorzugsrichtung feststellen (wenn alle Sägezähne in die gleiche Längsrichtung weisen), wodurch eine vorgesehene Strömungsrichtung in dem Erdwärmerohr an jeder Stelle festgestellt werden kann.

Bei einer anderen Ausführungsform des erfindungsgemäßen Erdwärmerohrs ist dieses mit einer Strömungsrichtungsangabe versehen. Auch wenn das vorliegende Erdwärmerohr auf der Innenseite (nur) glatt ist, können an den Übergängen, Verbindungsstücken und dergleichen Einlauf- und Auslaufkonusse angebracht sein, die den Strömungswiederstand des Gesamtsystems positiv beeinflussen können.

Bei einer anderen Ausführungsform sind die Rippen um bis zu 15° oder sogar bis zu 35° gegenüber einer Achse der Erdwärmerohre geneigt. Bei geneigten oder helixartigen Rippen kann beispielsweise durch eine Drehrichtung oder eine Steilheit der Drehung sofort festgestellt werden, welches Rohr vorliegt.

Bei einer zusätzlichen Ausführungsform des Erdwärmerohres mit Außen- Rippen sind konkave Abschnitte der Rippen verrundet. Damit sind die Täler zwischen den Rippen abgerundet ausgeführt und können damit leichter von einem Füllmaterial wie Beton gefüllt werden. Es kann ebenfalls vorgesehen sein, die Krümmung an das jeweilige Füllmaterial der Sondenbohrung anzupassen, um so eine maximale Anbindung der Sondenrohre an das Füllmaterial zu erreichen. Je größer die Körnung des Füllmaterials ist, desto größer können auch die Rippen bzw. die Krümmungs- bzw. Verrundungsradien der Täler zwischen den Rippen ausgeführt werden.

In einer weiteren Ausführungsform der vorliegenden Erfindung sind bei in Abschnitten vorliegenden Rippen Übergänge zwischen den geriffelten bzw. mit Rippen versehenen und den ungeriffelten bzw. nicht mit Rippen versehenen Abschnitten vorgesehen. Diese Übergänge können dazu beitragen, das Erdwärmerohr in Längsrichtung abzudichten. Sanfte Übergänge können im Vergleich zu unstetigen, abrupten Übergängen das Erdwärmerohr bei einer Belastung in Axialrichtung besser abdichten, da auch bei einer relativ geringen axialen Kraft ein beispielsweise konischer Übergang eine größeren Kraft in Radialrichtung erzeugen kann.

Es kann vorgesehen sein, dass es vorteilhaft ist, Vorlauf- von Rücklaufrohren zu unterscheiden, wenn beispielsweise eine Doppel-U-Sonde in ein Bohrloch eingesetzt ist, ist an den Rohren nicht ohne weiteres zu erkennen, welche der Rohre jeweils durch das in der Erde verborgene U verbunden sind. Es kann daher dazu kommen, dass die Enden der Erdwärmerohre einer Doppel-U-Sonde falsch zusammengefügt werden. Dies kann bei Verwendung von mit Rippen versehenen oder in der Flussrichtung gekennzeichneten Rohren einfach und sicher ausgeschlossen werden. Da die Erdwärmerohre üblicherweise vor dem Verschweißen in Muffen außen kalibriert bzw. auf einen Nenndurchmesser gebracht werden, stellen die Rippen beim Verschweißen kein Problem dar, da sie vor dem Verschweißen entfernt werden.

Eine Unterscheidbarkeit der Rohre kann mit der vorliegenden Erfindung einfach dadurch erreicht werden, dass beispielsweise für einen Vorlauf nur Rohre ohne Rippen verwendet werden, während für einen Rücklauf nur gerade oder Rohre mit schräg zur Längsrichtung verlaufenen Rippen Verwendung finden oder umgekehrt. Es ist ebenfalls möglich, nur Rohre mit Rippen die parallel zu einer Axialrichtung verlaufen für eine Vorlaufrichtung zu verwenden und beispielsweise Rohre mit Rippen die schräg zu einer Längsrichtung verlaufen nur für eine Rücklaufrichtung zu verwenden oder umgekehrt. Dadurch kann bei Wartungsarbeiten oder bei einer Beschädigung der Rohre sofort festgestellt werden, ob ein Vorlauf- oder Rücklaufrohr betroffen ist.

In einer Ausführungsform des Erdwärmerohrs besteht dieses aus Polyethylen PE 100. In einer weiteren Ausführungsform des Erdwärmerohrs besteht dieses aus PE 100 RC. In einer Ausführungsform des Erdwärmerohrs besteht dieses aus Polyethylen PE 100 RT. Diese beiden Materialien lassen sich besonders gut mit dem Material verschweißen, aus dem Erdwärmesondenfüße hergestellt werden.

In den Figuren werden Ausführungsformen der vorliegenden Erfindung schematisch dargestellt.
Figuren 1A und 1B zeigen einen herkömmlichen Erdwärmesondenfuß, der aus zwei Stücken zusammengesetzt ist, in einer Aufsicht und in einer Schnittansicht.
Figuren 2A bis 2C zeigen eine Aufsicht von oben und zwei Schnittansichten von Ausführungsformen eines Erdwärmesondenfußes.
Figur 2B zeigt eine Aufsicht von oben auf eine Querschnittsoptimierte Ausführungsform eines Erdwärmesondenfuß.
Figuren 3A bis 3C zeigen eine Aufsicht von oben und zwei Schnittansichten von einer Ausführungsform eines Einfach-U-Erdwärmesondenfußes.
Figuren 4A bis 4C zeigen eine Aufsicht von oben und zwei Schnittansichten von einer Ausführungsform eines Doppel-U-Erdwärmesondenfußes, der aus zwei Einfach-U-Erdwärmesondenfüßen nach Figur 3A bis 3C zusammengesetzt sind.
Figuren 5A bis 5C zeigen einzelne Schritte zum Spanen des Kanals.
Figur 6 zeigt einen Schnitt durch einen Kanal mit Einström- bzw. Ausström-Konen.
Figuren 7A und 7B stellen ein Durchmesserprofil bzw. Höhenprofil von Abschnitten des Kanals dar.
Figur 8 zeigt eine Sonde, die einen Erdwärmekopf mit erfindungsgemäßen Erdwärmerohren kombiniert.
Figur 9A zeigt einen Querschnitt durch ein erfindungsgemäßes Erdwärmerohr mit Längs-Rippen und eine Vergrößerung seiner Längs-Rippen.
Figur 9B zeigt eine Seitenansicht eines Erdwärmerohrs mit abschnittweisen Längs-Rippen.

Sowohl in den Figuren als auch in der Beschreibung werden gleiche oder ähnliche Bezugszeichen verwendet, um auf gleiche oder ähnliche Elemente und Komponenten Bezug zu nehmen.

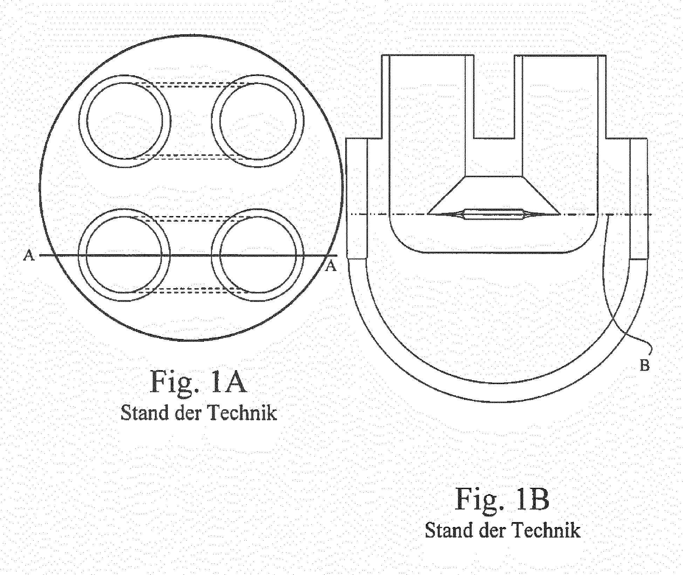

Figuren 1A und 1B zeigen einen herkömmlichen Erdwärmesondenfuß, der aus zwei Stücken zusammengesetzt ist in einer Aufsicht und in einer Schnittansicht.

In der Aufsicht von Figur 1A sind vier Ansatzstücke zu erkennen, an die mit einer gesonderten Heizmuffe Erdwärmerohre angeschlossen werden können. An dem Doppel-U-Sondenfuß ist eine Schnittlinie A-A dargestellt.

Figur 1B stellt einen Schnitt durch Figur 1A dar. In Figur 1B ist eine Linie 8 dargestellt, an denen die Teile 'zusammengeschweißt wurden. Beim Stand der Technik wurden die beiden Teile vor dem Zusammenschweißen mit im Querschnitt halbrunden Kanälen versehen, die nach dem Zusammenfügen einen U-förmigen Kanal ergeben. An den durch die Bohrungen erreichbaren Stellen kann eine herausgequollene Schweißnaht herausgebohrt werden. In dem waagerechten Teil des u-förmigen Kanals ist dies jedoch nicht möglich, wie es mit einer Endoskop-kamera oder einem Inspektionsspiegel an einem Sondenfuß nachgewiesen werden kann. Diese Reste von Schweißnähten stören die Strömung eines Erdwärmefluids. Die herkömmliche Auslegung hat zudem den Nachteil, dass an den Innenseiten der Bogenabschnitte Kanten mit einem Winkel von 90° auftreten, was sich ebenfalls negativ auf das Strömungsverhalten des Erdwärmefluids auswirkt.

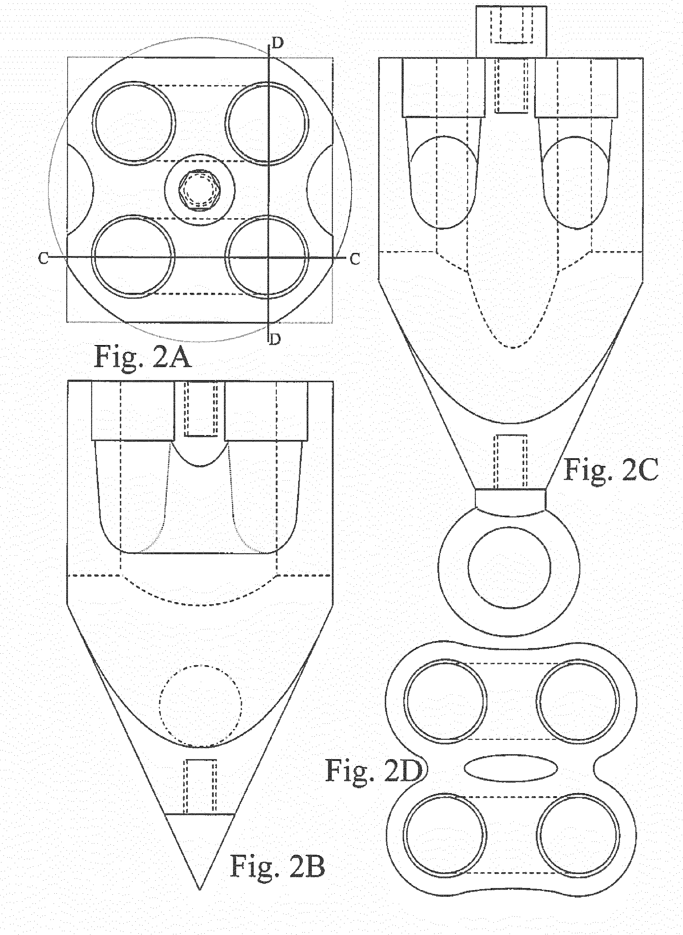

Figuren 2A bis 2C zeigen eine Aufsicht von oben und zwei Schnittansichten von Ausführungsformen eines erfindungsgemäßen Erdwärmesondenfußes.

Figur 2A zeigt eine Aufsicht auf einen Doppel-U-Erdwärmefuß 2. Der Doppel-U-Erdwärmefuß 2 umfasst einen ersten und einen zweiten u-förmigen Kanal. Jeder der Kanäle endet in zwei der insgesamt vier parallelen Muffen. In der Mitte ist ein oberes Gewinde an einem oberen Ende des Erdwärmefußes angebracht, um ein Einschubgestänge anzubringen. In das Gewinde ist eine Inbusschraube eingesetzt, die dazu dient, eine Kraft von einem Einschubgestänge in den Sondenfuß 2 einzuleiten. Seitlich ist der Erdwärmefuß 2 mit zwei Seitenkanälen versehen, die die projizierte Stirnfläche des Erdwärmefußes 2 verringern. Der Erdwärmefuß 2 umfasst dabei lediglich einen einzigen einstückigen Körper ohne eine Schweißnaht und ohne irgendwelche Gussnähte innerhalb der Kanäle. Die Schnittlinien C-C und D-D zeigen die Schnittverläufe der Schnittansichten von Figur 2B und 2C.

Figur 2B zeigt eine Schnittansicht des Doppel-U-Erdwärmefuß 2 entlang der Schnittlinie C-C von Figur 2A. Im Schnitt ist der genaue Verlauf des zweiten u-förmigen Kanals zu erkennen. Da der Doppel-U-Erdwärmefuß 2 aus einem einzigen einstückigen Körper spanend herausgearbeitet ist, weist der Kanal keine Schweißnähte, Schweißraupen oder dergleichen auf. Der zweite u-förmige Kanal endet in insgesamt zwei parallelen Muffen. Oben in der Mitte ist ein oberes Gewinde an dem oberen Ende des Erdwärmefußes 2 angebracht, um ein Einschubgestänge anzubringen. Unten in der Mitte ist ein unteres Gewinde an einer Unterseite des Erdwärmefußes 2 angebracht. In das untere Gewinde ist in Figur 2B eine Spitze eingeschraubt. Durch einen strichpunktierten Kreis ist der Ort angegeben, an dem aus dem Körper des Erdwärmefußes 2 eine Öse herausgearbeitet sein kann. Dazu kann der Unterteil des Erdwärmefußes 2 abgeflacht werden, um beispielsweise ein Gewicht besser aufnehmen zu können. In Figur 2B ist die Inbusschraube nicht dargestellt.

Figur 2C zeigt eine Schnittansicht des Doppel-U-Erdwärmefuß 2 entlang der Schnittlinie D-D von Figur 2A. Im Schnitt ist der genaue Querschnitt einer Ausführung der zwei
u-förmigen Kanäle zu erkennen. Da der Doppel-U-Erdwärmefuß 2 aus einem einzigen einstückigen Körper spanend herausgearbeitet ist, weisen die Kanäle keinerlei Schweißnähte, Schweißraupen oder dergleichen auf.

Auch hier enden die u-förmigen Kanäle in insgesamt 2 parallelen Muffen. Oben in der Mitte befindet sich ein oberes Gewinde an dem oberen Ende des Erdwärmefußes. In das Gewinde ist eine Inbusschraube eingesetzt, deren Kopf in einer Seitenansicht zu erkennen ist. Unten in der Mitte ist ein unteres
Gewinde an einer Unterseite des Erdwärmefußes angebracht. In das untere Gewinde ist in Figur 2C eine Einschrauböse anstelle der Spitze von Figur 2B eingeschraubt.

Ein Gewicht kann so einfach an der Öse eingehängt werden.

In Figur 2D ist eine Aufsicht auf einen Erdwärmefuß mit den Muffen
und den Kanälen dargestellt. Der Erdwärmefuß mit ist mit zwei Seitenkanälen und einem Zentralkanal versehen. Der Erdwärmefuß von Figur 2D ist auf eine minimale projizierte Stirnfläche optimiert. Da der Erdwärmefuß aus einem vollen Stück herausgespant ist, ist es ebenfalls möglich, die gesamte Außenform beliebig zu gestalten, ohne dadurch den bisherigen Einschränkungen herkömmlicher spanender Werkzeugmaschinen zu unterliegen.

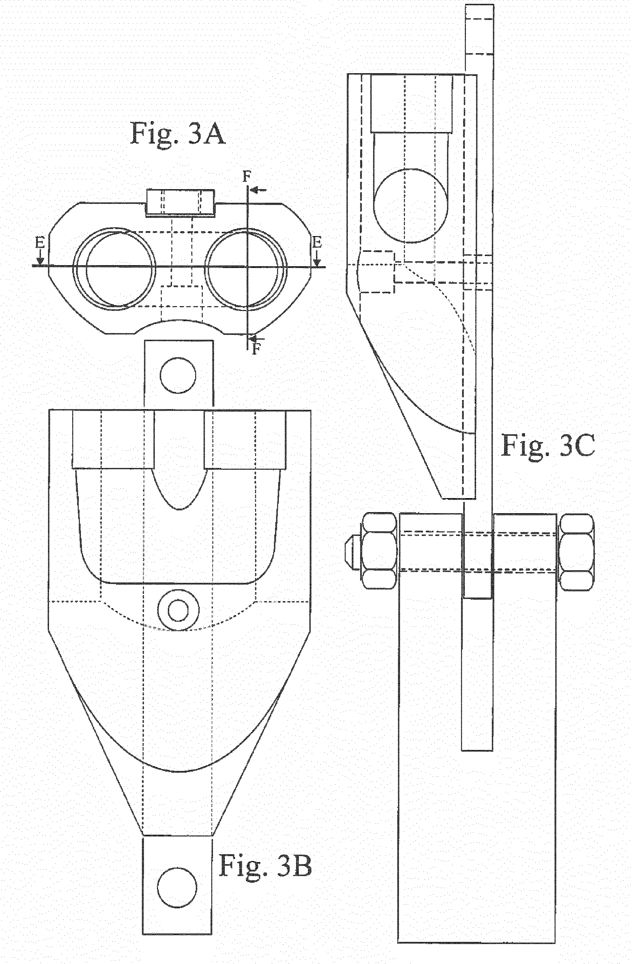

Figuren 3A bis 3C zeigen eine Aufsicht von oben und zwei Schnittansichten von einer Ausführungsform eines Einfach-U-Erdwärmesondenfußes.

Figur 3A zeigt eine Aufsicht auf einen Einfach-U-Erdwärmefuß. Der Einfach-U-Erdwärmefuß 2 umfasst nur einen ersten u-förmigen Kanal. Der Kanal endet in insgesamt zwei parallelen Muffen. An einer Seite des Einfach -U-Erdwärmefuß ist eine Längsnut eingelassen. In der Längsnut ist ein Flacheisen oder ein Flachstahl angeordnet, der mit einer Durchgangsschraube (nicht gezeigt) an dem Einfach-U-Erdwärmefuß befestigt ist. durch die Nut kann sich das Flacheisen nicht verdrehen
und ist stabilisiert. An den Löchern des Flacheisens kann ein Einschubgestänge oder ein Gewicht angebracht werden. An einer Seite ist der Einfach -U-Erdwärmefuß mit einem Seitenkanal versehen. Auch hier umfasst der Erdwärmefuß 2 lediglich einen einzigen einstückigen Körper, ohne eine Schweißnaht und ohne irgendwelche Gussnähte innerhalb des Kanals. Die Schnittlinien E-E und F-F zeigen die Schnittverläufe der Schnittansichten von Figur 3B und 3C.

Figur 3B zeigt eine Schnittansicht des Einfach-U-Erdwärmefußes entlang der Schnittlinie E-E von Figur 3A. Im Schnitt ist der genaue Verlauf des zweiten u-förmigen Kanals zu erkennen. Der Einfach-U-Erdwärmefuß ist auch hier aus einem einzigen massiven Körper spanend herausgearbeitet. Der Kanal weist keine Schweißnähte, Schweißraupen oder Gussgrate auf. Der u-förmige Kanal endet in insgesamt 2 parallelen Muffen. In der Mitte ist eine Durchgangsbohrung angebracht, durch die eine Schraube oder ein Niet das Flacheisen an dem Erdwärmefuß in der Längsnut befestigen kann. In der Figur ist gut zu erkennen, dass die Innenkontur des Kanals nahezu parabelförmig und glatt und ohne Kanten ausgestaltet ist.

Figur 3C zeigt eine Schnittansicht des Einfach-U-Erdwärmefußes entlang der Schnittlinie F-F von Figur 3A. Im Schnitt ist der genaue und kreisrunde Querschnitt dieser Ausführung des u-förmigen Kanals zu erkennen. Auch hier weist der Kanal keinerlei Schweißnähte, Schweißraupen oder dergleichen auf. Auch hier endet der u-förmige Kanal in zwei parallelen Muffen. An der linken Seite ist der Seitenkanal von Figur 3A gut zu erkennen. Unten ist ein Gewicht starr an dem Flacheisen angeschraubt.

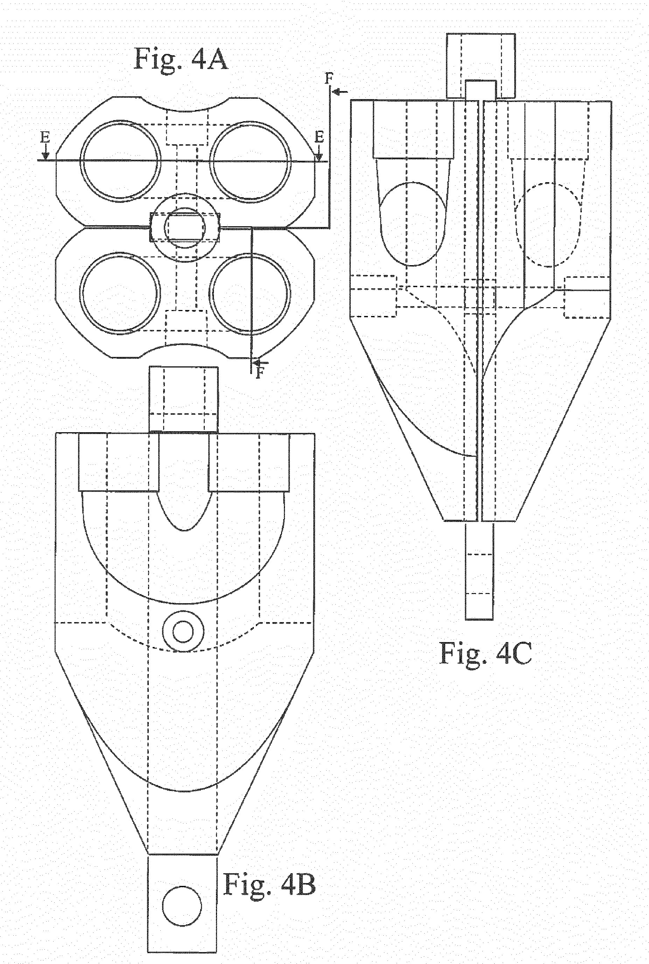

Figur 4A zeigt eine Aufsicht auf einen doppelten Einfach-U-Erdwärmefuß. Der Doppel-Einfach-U-Erdwärmefuß umfasst jeweils zwei getrennte Einfach-U-Erdwärmesondenfüße, mit jeweils nur einem u-förmigen Kanal. Der Kanal endet jeweils in zwei parallelen Muffen. An einer Seite jedes der Einfach -U-Erdwärmefüße ist eine Längsnut eingelassen. In den Längsnuten ist ein Flacheisen oder ein Flachstahl angeordnet, der die beiden Füße miteinander durch eine nicht gezeigte Durchgangsschraube verbindet. Durch die Nut und das Flacheisen können sich die einzelnen Füße nicht gegeneinander verdrehen oder verschieben. Oben an dem
Flacheisen ist eine Rohrhülse angebracht, in die ein Einschubgestänge oder ein Gewicht eingesteckt werden kann. An einer Seite ist jeder der Einfach-U-Erdwärmefüße jeweils mit einem Seitenkanal versehen. Auch hier umfasst jeder der Erdwärmefüße lediglich einen einzigen einstückigen Körper einen Kanal ohne eine Schweißnaht und ohne irgendwelche Gussnähte innerhalb des Kanals. Die Schnittlinien G-G und H-H zeigen die Schnittverläufe der Schnittansichten von Figur 4B und 4C.

Figur 4B zeigt eine Schnittansicht des doppelten Einfach-U-Erdwärmefußes entlang der Schnittlinie G-G von Figur 4A. Im Schnitt ist der genaue Verlauf des zweiten u-förmigen Kanals zu erkennen. In der Mitte ist eine Durchgangsbohrung angebracht, durch die eine Schraube oder ein Niet die beiden Füße miteinander
verbinden kann. Die Innenkontur des Kanals ist nahezu parabelförmig und glatt und weist keine Kanten auf. Im Gegensatz zu Figur 4A und 4C ist an dem Flacheisen oben nur eine Durchgangsbohrung dargestellt, um ein Einschubgestänge daran zu befestigen. In Figur 4B ist der Kanal in einer besonders ausgerundeten Ausführung dargestellt.

Figur 4C zeigt eine Schnittansicht des Einfach-U-Erdwärmefußes entlang der Schnittlinie H-H von Figur 4A. Der Schnitt entspricht im Wesentlichen dem Schnitt von Figur 3C, wobei auch die gleichen Bezugszeichen verwendet wurden. Oben an dem Flacheisen 22 ist auch hier eine Rohrhülse angebracht, in die ein Einschubgestänge oder ein Gewicht eingesteckt werden kann.

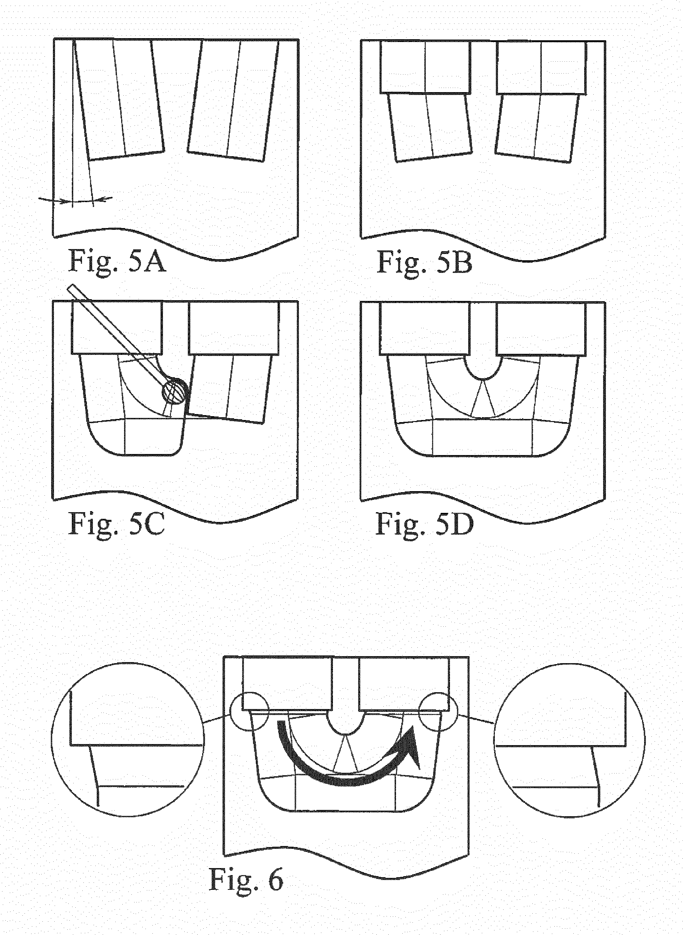

Figuren 5A bis 5C zeigen einzelne Schritte zum Spanen des Kanals. Zum Spanen des Kanals kann, wie in Figur 5A dargestellt, mit dem Bohren oder Fräsen einer ersten Bohrung II und einer zweiten Bohrung VI begonnen werden. Die Bohrungen II und VI sind hier in einem Winkel von 8° zueinander in den Körper hineingebohrt. Die beiden Bohrungen II und VI berühren sich dabei nicht. In Figur 5B ist dargestellt, wie die beiden Muffen I und VII in den Block hineingebohrt oder gefräst werden, um eine Anschlussmöglichkeit für die späteren Erdwärmerohre zu schaffen. In Figur 5C ist dargestellt, wie mit einem Kugelkopffräser ein erster Bogenabschnitt III in den Block hineingefräst wird. Mit einem spiegelsymmetrischen Vorgang kann der Kanal vervollständigt werden, wie es in der Figur 5D dargestellt ist. In Figur 5D sind die beiden Bogenabschnitte III und V durch einen kurzen waagerechten Abschnitt IV verbunden.

Figur 6 zeigt einen Schnitt durch einen Kanal mit Einström- bzw. Ausström-Konen bzw.-Trichtern. In Figur 6 ist der Übergang zwischen der erste Muffe I und
der ersten Bohrung II an einer Einströmseite mit einem Einlauftrichter versehen, der den Strömungswiderstand an dieser Stelle, an einem Spalt oder einer Schweißnaht verringert. An der anderen Seite ist am Übergang zwischen der zweiten Bohrung VI und der zweiten Muffe VII
eine Ausström- bzw. Auslaufseite mit einer Auslaufverengung versehen, die den Strömungswiderstand an dieser Stelle verringert, da der Fluidstrom von einem Spalt oder einer Schweißnaht weggeleitet wird. Die Querschnittsverringerung kann dabei sehr gering ausfallen, und glatt ausgeführt werden, um den Fluidstrom von einem Spalt wegzulenken. Es ist ebenfalls möglich ganz auf eine Querschnittsverengung zu verzichten, wenn der Querschnitt vor dem Ende der Bohrung erweitert wird, und am Ende der Bohrung wieder auf ein Normalmaß verringert wird. Ein derartiger Erdwärmesondenfuß kann mit einer Strömungsrichtungsangabe 70 versehen sein, um zu verhindern, dass die Einström- bzw. Ausström-Konen von einer falschen Seite aus angeströmt werden. Diese Ausführung kann vorteilhaft mit verschieden Rippen versehenen Erdwärmerohen kombiniert werden.

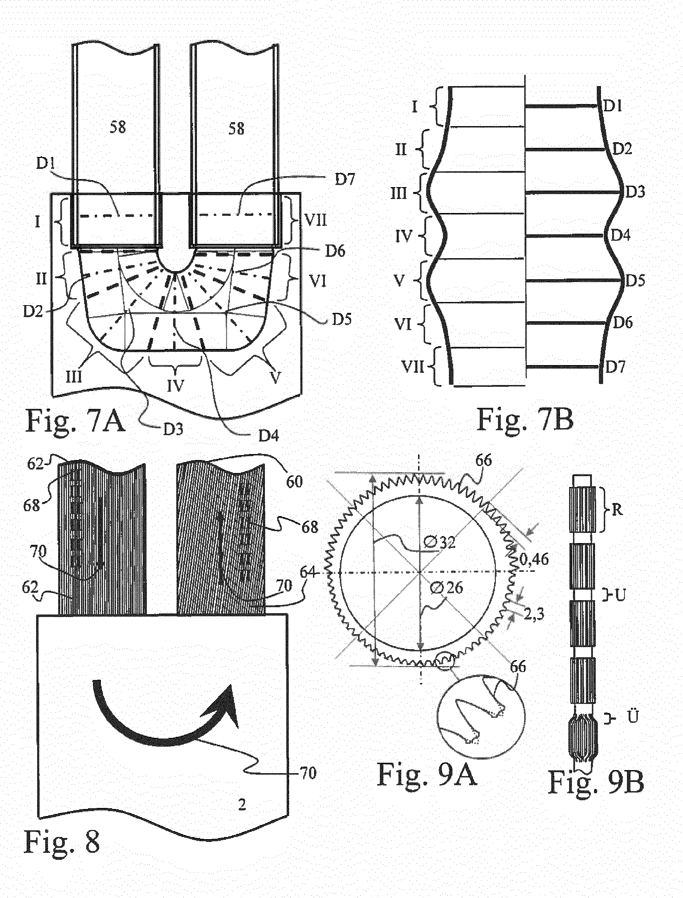

Figuren 7A und 7B stellen ein Durchmesserprofil bzw. Höhenprofil von Abschnitten des Kanals dar. In Figur 7A sind die einzelnen Abschnitte des Kanals mit den entsprechenden Unterteilungen dargestellt. Der Abschnitt I bezeichnet die erste Muffe mit einem Durchmesser D1. Der Abschnitt II bezeichnet die erste Bohrung mit einem Durchmesser D2. Der Abschnitt III bezeichnet den ersten Bogenabschnitt mit einem erhöhten Durchmesser D3. Der Abschnitt IV bezeichnet einen Abschnitt zwischen den Bogenabschnitten mit einem Durchmesser D4. Der Abschnitt V bezeichnet den zweiten Bogenabschnitt mit einem erhöhten Durchmesser D5. Der Abschnitt VI bezeichnet die erste Bohrung mit einem Durchmesser D6. Der Abschnitt VII bezeichnet die erste Muffe mit einem Durchmesser D7.

Durch die vergrößerte Querschnittsfläche des Kanals an dem ersten und dem zweiten Bogenabschnitt III und V im Vergleich zu dem Nenndurchmesser D2 und D5 der ersten und der zweiten Bohrung bzw. einem Innendurchmesser des Erdwärmerohrs wird die Strömungsgeschwindigkeit an diesen Stellen herabgesetzt. Durch eine kleinere Strömungsgeschwindigkeit des Erdwärmefluids wird die Belastung des Kanals bzw. der Kanalwand im Bereich der Bogenabschnitte III und V verringert. Durch einen vergrößerten Querschnitt im Bereich der Bogenabschnitte wird eine längere Lebensdauer des Erdwärmesondenfußes erwartet.

Figur 7B stellt den Verlauf der Durchmesser entlang einer Mittellinie des Kanals dar, um den Verlauf und die Veränderung der Breite bzw. eines Durchmessers des Kanals darzustellen. Figur 8 zeigt eine Erdwärmesonde, die einen Erdwärmefuß 2 mit Erdwärmerohren 60 kombiniert. Der Erdwärmefuß 2 entspricht der Version, die in Figur 6 dargestellt ist. Der Erdwärmefuß 2 ist mit einer Strömungsrichtungsangabe 70 versehen. Beide Erdwärmerohre 60 sind mit Außen-Rippen bzw. Riffeln und mit einer Strömungsrichtungsangabe 70 versehen. Das Erdwärmerohr 60, das den Zulauf bildet, weist Längstippen auf, die parallel zu einer Achse des Erdwärmerohrs 62 ausgerichtet ist. Das Erdwärmerohr 60, das den Ablauf bildet, weist schräge / helixförmige Längsrippen 64 auf. Es kann hier sofort zwischen Vorlauf- und Rücklaufrohren unterschieden werden. Zusätzlich sind die Erdwärmerohre 60, 62 noch mit einer Kreisangabe 68 in Form einer (römischen) 2 versehen, die angibt, dass die derart markierten Rohre zusammengehören und unten durch einen U-Bogen miteinander verbunden sind. Durch die Kreisangabe kann ebenfalls ausgeschlossen werden, dass ein Arbeiter bei einer Mehrfach-U-Sonde versehentlich einen Kreis zu einem geschlossenen Kreis verbindet bzw. kurzschließt und diesen dadurch "totlegt" und dadurch eine Doppel-U-Sonde zu einer einfachen U-Sonde macht.

Figur 9A zeigt einen Querschnitt durch ein Erdwärmerohr mit Längs-Rippen. Die Tiefe der Täler zwischen den Längsrippen 66 beträgt zwischen 0,2 und 1,5 mm. Diese Längsrippen 66 sollen eine Anbindung an ein Füllmaterial zwischen dem Bohrloch und der Erdwärmesonde verbessern. Durch eine bessere Anbindung kann zudem das Erdwärmerohr besser gegenüber dem Füllmaterial abgedichtet werden, da die Kontaktfläche zwischen dem Füllmaterial und dem Erdwärmerohr vergrößert wird. Durch eine bessere Anbindung kann die Lebensdauer einer Erdwärmesonde deutlich erhöht werden.

Zusätzlich ist ein geriffeltes bzw. gezacktes bzw. mit Rippen versehenes Rohr besser gegen Beschädigungen geschützt, da bei einem Kontakt mit einem anderen Gegenstand zuerst die Zacken abgetragen werden, bevor eine minimale Wandstärke des Rohrs verringert wird. Die Zacken 66 weisen einen steilen bergartigen bzw dreieckigen Querschnitt auf, dessen Spitze abgeplattet ist und wobei die Täler zwischen den Zacken bzw. der Zackengrund abgerundet bzw rund ausgeführt sind. Die verrundeten Riffeltäler bzw. Zackentäler bzw. verrundeten Täler zwischen den Rippen verbessern wiederum die Anbindung des Füllmaterials. Durch verrundete Zacken- bzw. Rippentäler in Verbindung mit spitzen Zackenrücken lässt sich eine verbesserte Füllung der Zackentäler und damit eine bessere Anhaftung des Füllmaterials erreichen. Durch eine verbesserte Füllung der Riffel- bzw. Rippentäler und eine bessere Verbindung zwischen den Rippen und dem Füllmaterial lässt sich eine verbesserte Abdichtung des Bohrlochs und der Erdwärmesonde in Axialrichtung erreichen. Auf der linken Seite oben sind Längsrippen mit einem im Allgemeinen dreieckigen Querschnitt dargestellt, wie sie mit herkömmlichen Extrudern bei einem Extrudieren des Erdwärmerohrs hergestellt werden können. Auf der linken Seite unten sind die Längsrippen an einem Endbereich gestaucht bzw. flachgedrückt, wodurch sich die Enden der Rippen verbreitern. Durch das verbreiterte Ende der Rippen können diese sich in einem Füllmaterial verkeilen, was zu einer besseren Anbindung zwischen dem Füllmaterial und dem Erdwärmerohr führt. Das Flachdrücken der Enden der Rippen kann erreicht werden, in dem ein Erdwärmerohr mit einem Querschnitt wie oben links dargestellt durch eingeheizten Ring gezogen wird, der einen kleineren Durchmesser aufweist als der Außendurchmesser der durch die nicht flachgedrückten Rippenenden definiert wird. Durch ein Stauchen der Rippenenden in Radialrichtung wird Material am Ende der Rippen zur Seite Verdrängt, wodurch eine Verbreiterung der Rippenenden erreicht werden kann. Die verbreiterten Rippenenden können eine verbesserte Anbindung zwischen einem Füllmaterial und dem Erdwärmerohr erreichen.

Auf der rechten Seite oben sind Längsrippen mit einem im Allgemeinen dreieckigen Querschnitt dargestellt, wobei die Täler zwischen den Rippen wie auch die Enden der Rippen verrundet sind. Auch diese Rippenform kann mit herkömmlichen Extrudern bei einem Extrudieren des Erdwärmerohrs hergestellt werden können. Auf der rechten Seite unten sind die Längsrippen an einem Endbereich gestaucht bzw. flachgedrückt, wodurch sich die Enden der Rippen verbreitern. Durch das verbreiterte Ende der Rippen können diese sich in einem Füllmaterial verkeilen, was zu einer besseren Anbindung zwischen dem Füllmaterial und dem Erdwärmerohr führt. Das Flachdrücken der Enden der Rippen kann auch hier erreicht werden, in dem ein Erdwärmerohr mit einem Querschnitt wie oben rechts dargestellt durch eingeheizten Ring gezogen wird, der einen kleineren Durchmesser aufweist als der Außendurchmesser der durch die nicht flachgedrückten Rippenenden definiert wird. Durch ein Stauchen der Rippenenden in Radialrichtung wird Material am Ende der Rippen zur Seite verdrängt, wodurch eine Verbreiterung der Rippenenden erzielt wird. Die verbreiterten Rippenenden können eine verbesserte Anbindung zwischen einem Füllmaterial und dem Erdwärmerohr erreichen.

Es ist ebenfalls möglich das Erdwärmerohr direkt mit den Rippen zu extrudieren und das noch teilweise heiße Material durch eine Kalibrierungsring bzw. einem Ziehstein gezogen werden um die Enden der Rippen flachzudrücken und so zu verbreitern. Durch ein derartiges Verfahren können die Rippen mit den verbreiterten Enden einfach und schnell hergestellt werden. Es ist ebenfalls möglich den Ziehstein so auszuführen, dass das Erdwärmerohr mit den noch nicht verbreiterten Rippen auch in Umfangsrichtung geführt wird, sodass die Enden der Rippen von außen nach innen durch eine Klinge in Radialrichtung leicht geschlitzt werden bevor die Teile der Rippen nach außen umgeformt werden. Hier werden die Rippen nicht nur an den Enden flachgedrückt sondern ebenfalls durch ein Biegen umgeformt. um die Verbreiterung zu erreichen.

Figur 9B zeigt eine Seitenansicht einer erfindungsgemäßen Ausführung eines Erdwärmerohrs mit einer abschnittweisen Längs-Zacken. Die Zackentiefe der Längs-Zacken 66 beträgt zwischen 0,2 und 1,5 mm. Hier wechseln sich Riffel-Abschnitte R mit Unterbrechungs-Abschnitten U ab. Die Länge der jeweiligen vorteilhaftesten Riffel-Abschnitte R und der Unterbrechungs-Abschnitten U hängt auch hier von den Bodenbeschaffenheiten und dem verwendeten Füllmaterial ab. Es ist bevorzugt, dass die Zacken-Abschnitte R deutlich länger sind als die ungezackten Unterbrechungs-Abschnitte U. Es ist vorgesehen, Unterbrechungs-Abschnitte U zwischen 1cm und 1m, bevorzugt zwischen 3cm und 50cm sowie zwischen 5cm und 25 zu verwenden. Es ist vorgesehen Zacken-Abschnitte R zwischen 3cm und 3m, bevorzugt zwischen 5cm und 150cm sowie zwischen 15cm und 75, weiter bevorzugt zwischen 20 und 50cm zu verwenden. Durch die Grenzen zwischen den Zacken-Abschnitten R und den Unterbrechungs-Abschnitten U sollen Grenzen geschaffen werden, die ein Ablöseverhalten zwischen dem Rohr und dem Füllmaterial verändern. Sollte sich die Verbindung zwischen dem Rohr und dem Füllmaterial in einem Bereich lösen, soll durch die Grenzen verhindert werden dass diese Ablösung an dem gesamten Erdwärmerohr entlangwandern kann. Es kann auch vorgesehen sein, Übergänge Ü zwischen gezackten und ungezackten Abschnitten vorzusehen. Durch sanfte Übergänge kann auch hier bei einem Schrumpfen oder einem Ausdehnen des Materials in Axialrichtung eine verbesserte Abdichtung in Axialrichtung zwischen dem Rohr und einem Füllmaterial erreicht werden. Bei einer Bewegung in Axialrichtung dichtet dabei jeweils eine Konusfläche eines entsprechenden Übergangs mit der entsprechenden Hohl-Konusfläche des Füllmaterials ab. Im Idealfall werden die Rohre dabei unterkühlt und damit in einem leicht geschrumpften Zustand in das Erdreich eingebracht und mit Füllmaterial verfüllt, so dass das Füllmaterial abbindet. Nachdem das Füllmaterial abgebunden hat, kann das Erdwärmerohr wieder auf Betriebstemperatur gebracht werden, wodurch es sich in dem Bohrloch und in dem abgebundenen Füllmaterial ausdehnt und so das Erdwärmerohr noch besser gegen das Füllmaterial abdichtet.

## Patentansprüche

1. Erdwärmerohr (60) mit Außen-Längs-Rippen, wobei die Längs-Rippen eine Rippentiefe zwischen 1,5 und 0,2mm, bevorzugt zwischen 1,0 und 0,3mm und weiter bevorzugt zwischen 0,6 und 0,3mm aufweisen, wobei die Rippen im Querschnitt etwa dreieckig mit abgeplatteten Spitzen und gerundetem Grund zwischen den Rippen ausgebildet sind,
**dadurch gekennzeichnet,**
**dass** die Rippen an den abgeplatteten Enden verbreitert sind.

2. Erdwärmerohr (60) mit Außen-Rippen gemäß Anspruch 1, wobei die Rippen zusätzlich eine sägezahnartige Längsstufung aufweisen.

3. Erdwärmerohr (60) mit Außen- Rippen gemäß Anspruch 1 oder 2,
wobei die Rohre mit einer Strömungsrichtungsangabe versehen sind.

4. Erdwärmerohr (60) mit Außen- Rippen gemäß Anspruch 1, 2 oder 3,
wobei die Rippen um bis zu 35°, bevorzugt bis zu 15° gegenüber einer Achse der Erdwärmerohre (60) geneigt sind.

5. Erdwärmerohr (60) mit Außen- Rippen gemäß einem der Ansprüche 1 bis 4,
wobei konkave Abschnitte der Rippen verrundet sind und/oder einen Verrundungsradius aufweisen.

6. Erdwärmerohr (60) mit Außen- Rippen gemäß einem der Ansprüche 1 bis 5, wobei die in Abschnitten vorliegende Rippen mit Übergängen (Ü) zwischen mit Rippen versehenen und nicht mit Rippen versehenen Abschnitten versehen sind.

7. Erdwärmesonde umfassend einen Erdwärmesondenfuß (2) und aufweisend ein Erdwärmerohr (60) mit Außen- Längs-Rippen gemäß Anspruch 1 bis 6.

8. Erdwärmesonde nach Anspruch 7, wobei der Erdwärmesondenfuß (2) aus Polyethylen, umfasst:
einen einstückigen Körper mit mindestens zwei parallel ausgerichteten Muffen zur Verbindung mit mindestens zwei Erdwärmerohren (60),
wobei der Körper mindestens einen u-förmigen Kanal aufweist, der die zwei Muffen miteinander verbindet, wobei der u-förmige Kanal glatt ist und keine Querschnittsverengungen aufweist, und
wobei der Erdwärmesondenfuß (2) aus einem einzelnen Polyethylen-Block spanend herausgearbeitet ist.

9. Erdwärmesonde nach Anspruch 8, wobei der Kanal anschließend an die Muffen zwei Bohrungen umfasst, die jeweils einen Winkel zwischen 4° und 12°, bevorzugt zwischen 6,5 und 9,5 und weiter bevorzugt zwischen 7,5 und 8,5 Grad zu den Muffen aufweisen.

10. Erdwärmesonde nach Anspruch 8 oder 9, **dadurch gekennzeichnet, dass** der Kanal von den Bohrungen ausgehend an zwei Bogenabschnitte grenzt, die miteinander verbunden sind, wobei eine Querschnittsfläche des Kanals in den Bogenabschnitten gegenüber einem Ende der Bohrung um 10% bis 50%, bevorzugt zwischen 20% und 40% und weiter bevorzugt zwischen 25% und 35% vergrößert ist.

11. Erdwärmesonde nach Anspruch 8, 9 oder 10, wobei der u-förmige Kanal mittels einer 5-Achsen-CNC-Fräse und/oder durch Wirbelfräsen aus dem Polyethylen-Block herausgearbeitet ist.

12. Erdwärmesonde nach einem der Ansprüche 8 bis 11, **gekennzeichnet durch** einen Körper, der zwei Muffen und einen Kanal aufweist und bevorzugt weiter eine Längsnut umfasst, in
der bevorzugt ein Flacheisen eingelegt bzw. befestigt ist und wobei bevorzugt ein Rohrhülse oben an dem Flacheisen angebracht ist, wobei die Erdwärmesonde bevorzugt zwei derartige miteinander verbundene Erdwärmesondenfüße umfasst.

13. Erdwärmesonde nach einem der Ansprüche 8 bis 12, **gekennzeichnet durch** ein oberes Gewinde, das zwischen den Muffen an einem oberen Ende des Erdwärmesondenfußes angeordnet ist, wobei bevorzugt eine Schraube in das obere Gewinde eingeschraubt ist, und/oder
durch ein unteres Gewinde, das an einem unteren Ende des Erdwärmesondenfußes (2) angeordnet ist, wobei bevorzugt eine
Spitze oder eine Öse, in das untere Gewinde eingeschraubt ist, und/oder
durch eine Öse am unteren Ende, die direkt aus dem Polyethylenblock herausgearbeitet ist, und/oder, weiter umfassend ein Gewicht, das starr an dem Erdwärmesondenfuß (2) befestigt ist.

14. Erdwärmerohr mit äußerlicher Längs-Rippen gemäß einem der Ansprüche 1 bis 6 und/oder Erdwärmesonde gemäß einem der Ansprüche 7 bis 13, **dadurch gekennzeichnet, dass** der Polyethylenblock, der Erdwärmesondenfuß (2), das Erdwärmerohr und/oder die Erdwärmesonde PE 100 oder PE 100 RC oder PE 100 RT umfassen.

## Claims

1. A geothermal heat pipe (60) with outer longitudinal ribs, wherein the longitudinal ribs have a rib depth between 1.5 and 0.2 mm, preferably between 1.0 and 0.3 mm, more preferably between 0.6 and 0.3 mm, wherein the ribs have a design having an approximately triangular cross section with flattened tips and a rounded base between the ribs, **characterized in that**
the ribs are widened at the flattened ends.

2. The geothermal heat pipe (60) with outer ribs according to Claim 1, wherein the ribs additionally have a sawtooth-like longitudinal step.

3. The geothermal heat pipe (60) with outer ribs according to Claim 1 or 2, wherein the pipes are provided with an indication of the flow direction.

4. The geothermal heat pipe (60) with outer ribs according to Claim 1, 2, or 3, wherein the ribs are inclined by up to 35°, preferably up to 15°, with respect to an axis of the geothermal heat pipes (60).

5. The geothermal heat pipe (60) with outer ribs according to one of Claims 1 to 4, wherein concave sections of the ribs are rounded and/or have a rounding radius.

6. The geothermal heat pipe (60) with outer ribs according to one of Claims 1 to 5,
wherein the ribs that are present in sections are provided with transitions (U) between sections that are provided with ribs and sections that are not provided with ribs.

7. A geothermal heat probe that includes a geothermal heat probe foot (2) and a geothermal heat pipe (60) with outer longitudinal ribs according to Claims 1 to 6.

8. The geothermal heat probe according to Claim 7, wherein the geothermal heat probe foot (2), made of polyethylene, includes:
a one-piece body having at least two bushings, oriented in parallel, for connection to at least two geothermal heat pipes (60),
wherein the body has at least one U-shaped channel that connects the two bushings to one another, wherein the U-shaped channel is smooth and has no cross-sectional constrictions, and
wherein the geothermal heat probe foot (2) is machined out of a single polyethylene block.

9. The geothermal heat probe according to Claim 8, wherein the channel includes two boreholes that adjoin the bushings and that each have an angle between 4 and 12 degrees, preferably between 6.5 and 9.5 degrees, more preferably between 7.5 and 8.5 degrees, with respect to the bushings.

10. The geothermal heat probe according to Claim 8 or 9, **characterized in that** the channel, starting from the boreholes, adjoins two curve sections that are joined together, wherein a cross-sectional area of the channels in the curve sections is enlarged relative to one end of the borehole by 10% to 50%, preferably 20% to 40%, more preferably 25% to 35%.

11. The geothermal heat probe according to Claim 8, 9, or 10, wherein the U-shaped channel is machined out of the polyethylene block using a 5-axis CNC milling machine and/or by trochoidal milling.

12. The geothermal heat probe according to one of Claims 8 to 11, **characterized by** a body that has two bushings and a channel, and that preferably also includes a longitudinal groove in which a flat bar is preferably inserted or affixed, and
wherein a tubular sleeve is preferably mounted on the top of the flat bar, wherein the geothermal heat probe preferably includes two such geothermal heat probe feet that are connected to one another.

13. The geothermal heat probe according to one of Claims 8 to 12, **characterized by** an upper thread that is situated between the bushings at an upper end of the geothermal heat probe foot, wherein a screw is preferably screwed into the upper thread, and/or **characterized by** a lower thread that is situated at a lower end of the geothermal heat probe foot (2), wherein a tip or an eyelet is preferably screwed into the lower thread, and/or
**characterized by** an eyelet at the lower end which is directly machined out of the polyethylene block, and/or further including a weight that is fixedly fastened to the geothermal heat probe foot (2).

14. A geothermal heat pipe with outer longitudinal ribs according to one of Claims 1 to 6 and/or a geothermal heat probe according to one of Claims 7 to 13, **characterized in that** the polyethylene block, the geothermal heat probe foot (2), the geothermal heat pipe, and/or the geothermal heat probe contain (s) PE 100 or PE 100 RC or PE 100 RT.

## Revendications

1. Tube géothermique (60) à nervures longitudinales extérieures, dans lequel les nervures longitudinales présentent une profondeur de nervure comprise entre 1,5 et 0,2 mm, de préférence entre 1,0 et 0,3 mm, et de plus grande préférence entre 0,6 et 0,3 mm, dans lequel les nervures sont réalisées en section transversale de manière approximativement triangulaire avec des sommets aplatis et une base arrondie entre les nervures,
**caractérisé en ce que** les nervures sont élargies au niveau des extrémités aplaties.

2. Tube géothermique (60) à nervures extérieures selon la revendication 1, dans lequel les nervures présentent de plus une graduation longitudinale en dents de scie.

3. Tube géothermique (60) à nervures extérieure selon la revendication 1 ou 2, dans lequel les tubes sont munis d'un indicateur de sens d'écoulement.

4. Tube géothermique (60) à nervures extérieure selon la revendication 1, 2 ou 3, dans lequel les nervures sont inclinées jusqu'à 35°, de préférence jusqu'à 15° par rapport à un axe des tubes géothermiques (60).

5. Tube géothermique (60) à nervures extérieures selon l'une quelconque des revendications 1 à 4, dans lequel des parties concaves des nervures sont arrondies et/ou présentent un rayon d'arrondi.

6. Tube géothermique (60) à nervures extérieures selon l'une quelconque des revendications 1 à 5, dans lequel les nervures réalisées par tronçons sont munies de transitions (Ü) entre des tronçons avec et sans nervures.

7. Sonde géothermique, comprenant un pied de sonde géothermique (2) et présentant un tube géothermique (60) à nervures longitudinales extérieures selon les revendications 1 à 6.

8. Sonde géothermique selon la revendication 7, dans laquelle le pied de sonde géothermique (2) en polyéthylène comprend :
un corps intégral avec au moins deux manchons alignés en parallèle, destinés à une connexion à au moins deux tubes géothermiques,
dans laquelle le corps présente au moins un canal en forme de U reliant les deux manchons l'un à l'autre, le canal en forme de U étant lisse et ne présentant pas de rétrécissements de section, et
dans laquelle le pied de sonde géothermique (2) est façonné par enlèvement de matière à partir d'un seul bloc de polyéthylène.

9. Sonde géothermique selon la revendication 8, dans laquelle le canal comprend après les manchons deux alésages présentant respectivement un angle compris entre 4° et 12°, de préférence compris entre 6,5 et 9,5 et de plus grande préférence compris entre 7,5 et 8,5 degrés par rapport aux manchons.

10. Sonde géothermique selon la revendication 8 ou 9, **caractérisée en ce qu'**en partant des alésages, le canal est adjacent à deux parties en arc reliées ensemble, dans laquelle une superficie de la section du canal est agrandie dans les parties en arc par rapport à une extrémité de l'alésage de 10 % à 50 %, de préférence entre 20 % et 40 % et de plus grande préférence entre 25 % et 35 %.

11. Sonde géothermique selon la revendication 8, 9 ou 10, dans laquelle le canal en forme de U est façonné à partir du bloc de polyéthylène au moyen d'une fraiseuse CNC à 5 axes et/ou par fraisage en tourbillon.

12. Sonde géothermique selon l'une quelconque des revendications 8 à 11, **caractérisée par** un corps présentant deux manchons et un canal et comprenant de plus grande préférence une rainure longitudinale dans laquelle de préférence un fer plat est inséré ou fixé, et dans laquelle de préférence un manchon tubulaire est rattaché en haut au fer plat, la sonde géothermique comprenant de préférence deux dits pieds de sonde géothermique reliés ensemble.

13. Sonde géothermique selon l'une quelconque des revendications 8 à 12, **caractérisée**
**par** un filetage supérieur disposé entre les manchons à une extrémité supérieure du pied de sonde géothermique, une vis étant de préférence vissée dans le filetage supérieur, et/ou
par un filetage inférieur disposé à une extrémité inférieure du pied de sonde géothermique, un bout pointu ou un œillet étant de préférence vissé dans le filetage inférieur, et/ou
par un œillet à l'extrémité inférieure façonné directement à partir du bloc de polyéthylène, et/ou
comprenant en outre un poids fixé rigidement au pied de sonde géothermique (2).

14. Tube géothermique à nervures longitudinales extérieures selon l'une quelconque des revendications 1 à 6 et/ou sonde géothermique selon l'une quelconque des revendications 7 à 13, **caractérisés en ce que** le bloc de polyéthylène, le pied de sonde géothermique (2), le tube géothermique et/ou la sonde géothermique comprennent du PE 100 ou du PE 100 RC ou du PE 100 R.
